# EUROPÄISCHE PATENTANMELDUNG

(11) **EP 3 744 467 A1**
(43) Veröffentlichungstag der Anmeldung: **02.12.2020**
(21) Anmeldenummer: 19176685.6
(22) Anmeldetag: 27.05.2019
(51) Int. Cl.: B23K 20/12, B23K 103/10

(54) **VORRICHTUNG ZUM REIBPUNKTSCHWEISSEN**

(71) Anmelder: Harms & Wende GmbH & Co. KG, 21079 Hamburg (DE)
(72) Erfinder: Luidhardt, Fritz, 20355 Hamburg (DE); Bui, Nguon-Nhan, 21073 Hamburg (DE)
(74) Vertreter: Glawe, Delfs, Moll

(57) **Zusammenfassung**

Vorrichtung zum Reibpunktschweißen, mit einem Stempel (24), einer koaxial innerhalb des Stempels (24) angeordneten Hülse (25) und einem koaxial innerhalb der Hülse (25) angeordneten Stift (26). Ein Drehantrieb (29) ist dazu ausgelegt, eine Drehbewegung der Hülse (25) und/oder des Stifts (26) relativ zu dem Stempel (24) anzutreiben. Ein Linearantrieb (30, 31) ist dazu ausgelegt, eine Linearbewegung der Hülse (25) und/oder des Stifts (26) relativ zu dem Stempel (24) anzutreiben. In einem distal angeordneten Dichtabschnitt (36) schließt der Stempel (24) mit der Hülse (25) einen Dichtspalt (37) ein. In einem zu dem Dichtabschnitt (36) benachbarten Aufnahmeabschnitt (35) schließt der Stempel (24) mit der Hülse (25) einen Aufnahmeraum (38) ein. Der Stempel (24) umfasst eine radiale Durchgangsöffnung (42), die in Axialrichtung (27) mit dem Dichtabschnitt (36) und mit dem Aufnahmeabschnitt (35) überlappt.

## Beschreibung

Die Erfindung betrifft eine Vorrichtung zum Reibpunktschwei-βen. Die Vorrichtung umfasst einen Stempel, eine koaxial innerhalb des Stempels angeordnete Hülse und einen koaxial innerhalb der Hülse angeordneten Stift. Ein Drehantrieb ist dazu ausgelegt, eine Drehbewegung der Hülse und/oder des Stifts relativ zu dem Stempel anzutreiben. Ein Linearantrieb ist dazu ausgelegt, eine Linearbewegung der Hülse und/oder des Stifts relativ zu dem Stempel anzutreiben.

Das Reibpunktschweißen kann genutzt werden, um aufeinander liegende Bleche, insbesondere Bleche aus Aluminium-Materialien, miteinander zu verbinden. Ein distales Ende eines Schweißwerkzeugs kann an das oberste Blech herangeführt werden, so dass mit dem Stempel ein Druck in Axialrichtung auf das oberste Blech ausgeübt wird. Die Hülse kann eine Drehbewegung durchführen, mit der das Material des Blechs in einen teigigen Zustand versetzt wird, so dass das Material unter dem axialen Druck der Hülse verdrängt werden kann. Ein Raum zur Aufnahme des verdrängten Materials kann dadurch bereitgestellt werden, dass der Stift parallel zu der Vorwärts-Bewegung der Hülse zurückgezogen wird. Die Vorwärts-Bewegung der Hülse erstreckt sich bis in das unterste zur verbindenden Blech. Ist bis in ausreichende Tiefe in das Material der Bleche eingewirkt worden, kann die Hülse zurückgezogen werden und der Stift gleichzeitig nach vorne geführt werden, so dass das teigig durchmischte Material der beiden Bleche den Verbindungsbereich gleichmäßig ausfüllt. Nach dem Aushärten des Materials ergibt sich eine punktförmige Verbindung zwischen den beiden Blechen.

Während des Schweißvorgangs kommt es zu einer Relativbewegung zwischen dem Stempel und der Hülse. Wenn das teigige Material der Bleche zwischen den Stempel und die Hülse eindringt, kann die Standzeit der Vorrichtung beeinträchtigt werden.

Der Erfindung liegt die Aufgabe zugrunde, eine Vorrichtung zum Reibpunktschweißen mit verbesserter Standzeit vorzustellen. Ausgehend vom genannten Stand der Technik wird die Aufgabe gelöst mit den Merkmalen des unabhängigen Anspruchs. Vorteilhafte Ausführungsformen sind in den Unteransprüchen angegeben.

Bei der erfindungsgemäßen Vorrichtung schließt in einem distal angeordneten Dichtabschnitt der Stempel mit der Hülse einen Dichtspalt ein. In einem zu dem Dichtabschnitt benachbarten Aufnahmeabschnitt schließt der Stempel mit der Hülse einen Aufnahmeraum ein. Der Stempel umfasst eine radiale Durchgangsöffnung, die in Axialrichtung mit dem Dichtabschnitt und mit dem Aufnahmeabschnitt überlappt.

Die Erfindung geht davon aus, dass ein Eindringen des teigigen Materials in den Dichtspalt zwischen dem Stempel und der Hülse nicht vollständig vermieden werden kann. Mit der Erfindung wird angestrebt, das in den Dichtspalt eindringende teigige Material so zu führen, dass es den Betrieb der Schweißvorrichtung nicht beeinträchtigt. Durch die radiale Durchgangsöffnung in dem Stempel kann das distale Ende der Vorrichtung gekühlt werden, so dass das teigige Material kurz nach dem Eindringen in den Dichtspalt aushärtet. Indem die Durchgangsöffnung mit dem Dichtabschnitt überlappt, kann das Aushärten des teigigen Materials unter dem gleichzeitigen Einfluss einer Scherbewegung zwischen dem Stempel und der Hülse stattfinden, so dass das Material beim Aushärten in kleine Partikel zerlegt wird. Die kleinen Partikel können leicht durch die Durchgangsöffnung ausgetragen werden, so dass sie den weiteren Betrieb der Vorrichtung nicht beeinträchtigen.

Die Vorrichtung kann sich zwischen einem proximalen Ende und einem distalen Ende erstrecken. Das proximale Ende der Vorrichtung kann an einem Rahmen aufgehängt sein. Der Drehantrieb und/oder der Linearantrieb können dazu ausgelegt sein, eine Bewegung der Hülse und/oder des Stifts relativ zu dem Rahmen anzutreiben. Der Stempel kann in einer festen räumlichen Beziehung zu dem Rahmen stehen. Die erfindungsgemäße Vorrichtung kann ein Element einer Werkzeugmaschine sein, wobei die Werkzeugmaschine eine Antriebsvorrichtung umfasst, um den Rahmen der Schweißvorrichtung so zu bewegen, dass ein distales Ende des Stempels auf einer Oberfläche der zu verbindenden Blechen aufliegt. Die Schweißvorrichtung kann einen Gegenhalter umfassen, wobei der Gegenhalter eine Auflagefläche aufweist, die einem distalen Ende des Stempels gegenüberliegt. Ein distales Ende des Stempels kann als Stirnfläche ausgebildet sein, die dazu ausgelegt ist, auf die Oberfläche der Bleche aufgelegt zu werden. Die Stirnfläche kann einen rechten Winkel einschließen mit einer Axialrichtung, die sich zwischen dem proximalen Ende und dem distalen Ende des Stempels erstreckt. Die Achse der Drehbewegung der Hülse und/oder des Stifts kann sich parallel zu dieser Axialrichtung erstrecken. Die Linearbewegung der Hülse und/oder des Stifts kann parallel zu der Axialrichtung ausgerichtet sein. Die Vorrichtung kann einen ersten Linearantrieb und einen zweiten Linearantrieb umfassen, so dass die Hülse und der Stift in Axialrichtung unabhängig voneinander bewegt werden können.

Die Vorrichtung kann einen Luftkanal umfassen, wobei die Durchgangsöffnung einen Abschnitt des Luftkanals bildet. Der zwischen dem Stempel und der Hülse eingeschlossene Aufnahmeraum kann einen weiteren Abschnitt des Luftkanals bilden. Der Luftkanal kann so gestaltet sein, dass bezogen auf die Richtung des Luftstroms die Durchgangsöffnung hinter dem Aufnahmeraum angeordnet ist. Ein von dem Aufnahmeraum kommender Luftstrom kann bis zum distalen Ende des Stempels im Bereich des Dichtabschnitts vordringen und dort zur Kühlung des eindringenden teigigen Materials beitragen. Sobald das Material ausgehärtet ist und sich die geeignete Partikelgröße eingestellt hat, kann das Material zusammen mit dem Luftstrom durch die Durchgangsöffnung austreten.

Der Luftkanals kann eine Einlassöffnung aufweisen, die an einem proximalen Ende des Aufnahmeraums mündet. An die Einlassöffnung kann eine geeignete Einrichtung angeschlossen sein, wie beispielsweise ein Gebläse oder ein Druckluftspeicher, mit dem der Luftstrom entlang dem Luftkanal in Bewegung versetzt werden kann. Es kann eine Kühleinrichtung vorgesehen sein, um den Luftstrom zu kühlen. Beispielsweise kann der Luftstrom beim Eintritt in die Vorrichtung eine Temperatur zwischen 25°C und -15°C haben. Der Druck, mit dem die Luft in den Luftkanal eingebracht wird, kann beispielsweise um 2 bar bis 8 bar höher sein als Atmosphärendruck.

Die Kühlung der Vorrichtung kann weiter verbessert werden, wenn der Stempel mit ein oder mehreren Kühlbohrungen versehen ist, die sich in Axialrichtung innerhalb der Wand des Stempels erstrecken. Zur Kühlung des Stempels kann eine Kühlflüssigkeit durch die Kühlbohrungen hindurchgeleitet werden. Die Kühlflüssigkeit kann beispielsweise am proximalen Ende des Stempels in die Bohrungen eingeleitet werden und sich in Richtung des distalen Endes bewegen.

Die Relativbewegung zwischen dem Stempel, der Hülse und/oder dem Stift kann mit einem Schmierstoff geschmiert sein. Als Schmierstoff kommen beispielsweise Öle, Fette, Wachse, Emulsionen in Betracht. Dafür ist es von Vorteil, wenn die Kühlung der Vorrichtung so eingerichtet ist, dass die Temperatur der mit dem Schmierstoff in Berührung kommenden Komponenten innerhalb des für den Schmierstoff geeigneten Temperaturbereichs liegt, also insbesondere unterhalb der Verkokungstemperatur von Öl, wenn Öl als Schmierstoff verwendet wird.

Für die Kühlwirkung ist es weiter von Vorteil, wenn das jeweilige Kühlmedium bis nahe an das distale Ende der Vorrichtung herangeführt werden kann. Der Abstand zwischen dem distalen Ende des Stempels und dem nächstliegenden Abschnitt des Kühlkanals kann beispielsweise kleiner sein als 20 %, vorzugsweise kleiner sein als 10 % der Länge des Kühlkanals in dem Stempel. Zusätzlich oder alternativ dazu kann die axiale Länge des Dichtabschnitts zwischen dem Stempel und der Hülse kleiner sein als der Außendurchmesser der Hülse, insbesondere kleiner sein als der Außendurchmesser des Stifts. Insbesondere kann die Länge des Dichtabschnitts in Axialrichtung kleiner sein als 80 %, vorzugsweise kleiner sein als 60 %, weiter vorzugsweise kleiner sein als 40 % der Außendurchmesser der Hülse. Der Außendurchmesser der Hülse kann beispielsweise zwischen 5 mm und 15 mm, vorzugsweise zwischen 7 mm und 12 mm liegen. Die axiale Länge des Dichtabschnitts kann beispielsweise zwischen 1 mm und 5 mm, vorzugsweise zwischen 2 mm und 3 mm liegen. Die axiale Länge des Dichtabschnitts wird in einem Bereich gemessen, in dem es keine Überschneidung mit der Durchgangsöffnung gibt. Die Überlappung mit der Durchgangsöffnung kann sich über wenigstens 10 %, vorzugsweise wenigstens 20 %, weiter vorzugsweise wenigstens 30 % der axialen Länge des Dichtspalts erstrecken.

Der Aufnahmeraum zwischen dem Stempel und der Hülse kann die Form eines Ringraums haben, der sich über den Umfang der Hülse erstreckt. Ein Luftstrom, der durch den Aufnahmeraum geführt wird, kann dann als Kühlluftstrom wirken, mit dem die Innenfläche des Stempels und die Außenfläche der Hülse über ihren gesamten Umfang gekühlt werden. Für eine gleichmäßige Verteilung des Luftstroms über den Umfang der Vorrichtung kann es von Vorteil sein, wenn der Stempel eine Mehrzahl von Durchgangsöffnungen hat. Mehrere oder alle der Durchgangsöffnungen können die genannten Merkmale der Durchgangsöffnung aufweisen, also insbesondere so angeordnet sein, dass sie in Axialrichtung sowohl mit dem Dichtabschnitt als auch mit dem Aufnahmeabschnitt überlappen. Die Durchgangsöffnungen können verteilt über den Umfang des Stempels, insbesondere gleichverteilt über den Umfang des Stempels angeordnet sein. Die Anzahl der Durchgangsöffnungen kann beispielsweise zwischen 2 und 8, vorzugsweise zwischen 3 und 6 liegen.

Die Hülse der erfindungsgemäßen Vorrichtung kann eine zylinderförmige Außenwand aufweisen. Die Zylinderwand kann sich ausgehend von einer am distalen Ende angeordneten Stirnfläche in Richtung des proximalen Ende des erstrecken. Die Länge der Zylinderfläche in Axialrichtung kann so bemessen sein, dass über den gesamten linearen Verfahrbereich der Hülse, ein Abschnitt der Zylinderfläche dem Dichtabschnitt des Stempels gegenüberliegt. Damit wird erreicht, dass die Geometrie des Dichtspalts unabhängig von der axialen Position der Hülse ist. Wenn die Durchgangsöffnung in Axialrichtung mit dem Dichtabschnitt überlappt, so gibt es einen ersten Querschnittsbereich der Durchgangsöffnung, in dem das Ende der Durchgangsöffnung unmittelbar der Zylinderfläche der Hülse gegenüberliegt. In einem zweiten Querschnittsbereich der Durchgangsöffnung ist der Aufnahmeraum zwischen dem Ende der Durchgangsöffnung und der Zylinderfläche eingeschlossen. Bei einer radialen Durchgangsöffnung erstreckt die Durchgangsöffnung sich zwischen einem in der Außenwand angeordneten Ende der Öffnung und einem in der Innenwand des Stempels angeordneten Öffnung.

Der Aufnahmeraum kann durch eine erste zylinderförmige Innenwand des Stempels begrenzt sein. Der Dichtspalt kann durch eine zweite zylinderförmige Innenwand des Stempels begrenzt sein. Die zweite zylinderförmige Innenwand kann einen kleineren Durchmesser haben als die erste zylinderförmige Innenwand.

Der Übergangsbereich zwischen der ersten zylinderförmigen Innenwand und der zweiten zylinderförmigen Innenwand kann als abgerundete Kontur gestaltet sein. Die abgerundete Kontur kann über den Umfang des Stempels konstant sein. Durch die abgerundete Kontur können Ecken und Kanten vermieden werden, in denen eingedrungenes Material sich festsetzen könnte. Die erfindungsgemäße Durchgangsöffnung kann sich über den Übergangsbereich hinweg erstrecken.

Die Hülse kann eine zylinderförmige Innenfläche aufweisen, die den Stift der erfindungsgemäßen Vorrichtung umgibt. Die Hülse bzw. der Stift können einen ersten axialen Abschnitt umfassen, in dem zwischen der Hülse und dem Stift ein zweiter Aufnahmeraum eingeschlossen ist. Die Hülse bzw. der Stift können einen zweiten axialen Abschnitt umfassen, in dem die Hülse und der Stift einen Dichtspalt zwischen sich einschließen. Der Dichtspalt kann benachbart zum distalen Ende der Vorrichtung, insbesondere benachbart zum distalen Ende des Stifts angeordnet sein.

Der Stift kann an seinem distalen Ende eine Stirnfläche aufweisen, die mit der Axialrichtung einen rechten Winkel einschließen kann. Die Vorrichtung kann einen Ausgangszustand umfassen, in dem die Stirnfläche des Stifts bündig mit der Stirnfläche der Hülse abschließt und in dem die Stirnfläche der Hülse bündig mit der Stirnfläche des Stempels abschließt. In diesem Ausgangszustand kann das distale Ende der Vorrichtung zu Beginn des Schweißvorgangs auf die zu bearbeitenden Bleche aufgelegt werden.

Der Schweißvorgang kann so durchgeführt werden, dass der Stempel während des gesamten Schweißvorgangs eine axiale Position beibehält. Die Hülse und/oder der Stift können zu Beginn des Schweißvorgangs relativ zu dem Stempel in Rotation versetzt werden. Die Hülse und der Stempel können mit gleicher Drehgeschwindigkeit oder unabhängig voneinander in Rotation versetzt werden. Wenn das Material der Bleche beginnt, in einen teigigen Zustand überzugehen, kann die Hülse nach vorne gefahren werden, so dass sie in das Material der Bleche eindringt. Parallel dazu kann der Stift zurückgezogen werden, so dass ein Raum zur Aufnahme des verdrängten Materials der Bleche geboten wird. Wenn die Hülse bis zum untersten der zu verbindenden Bleche vorgestoßen ist, kann die Linearbewegung umgekehrt werden, so dass die Hülse zurückgezogen wird und der Stift parallel dazu nach vorne geführt wird. Der Schweißvorgang kann damit enden, dass die Hülse und der Stift wieder die gleiche axiale Position einnehmen wie im Ausgangszustand.

Zur Verbesserung der Stabilität der Schweißverbindung kann es wünschenswert sein, den Schweißpunkt im Übergangsbereich zwischen dem Stempel und der Hülse aufzudicken. Die Stirnfläche des Stempels kann zu diesem Zweck eine zu der Hülse benachbarte Ausnehmung aufweisen, die gegenüber der Stirnfläche leicht zurückversetzt ist. Zusätzlich oder alternativ dazu kann die Stirnfläche der Hülse eine zu dem Stempel benachbarte Ausnehmung aufweisen, die gegenüber der Stirnfläche der Hülse zurückversetzt ist. Die Ausnehmungen können einen ringförmigen Raum definieren, in dem das Material zur Aufdickung des Schweißpunkts aufgenommen wird. Ist die Stirnfläche der Hülse nicht mit einer solchen Ausnehmung versehen, so kann eine Aufdickung des Schweißpunks erreicht werden, indem die Hülse am Ende des Schweißvorgangs etwas über den Ausgangszustand hinaus zurückgezogen wird. Ein Stempel für eine Schweißvorrichtung, in dessen Stirnfläche eine Ausnehmung in einem radial inneren Abschnitt der Stirnfläche ausgebildet ist, hat eigenständigen erfinderischen Gehalt unabhängig davon, ob der Stempel in einer erfindungsgemäßen Schweißvorrichtung verwendet wird. Der Stempel kann mit weiteren Merkmalen fortgebildet werden, die im Zusammenhang der erfindungsgemäßen Schweißvorrichtung beschrieben sind.

Die Erfindung betrifft außerdem eine mit einer solchen Schweißvorrichtung ausgestattete Werkzeugmaschine.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Werkzeugmaschine;
- Fig. 2:: eine schematische Darstellung eines Schweißvorgangs;
- Fig. 3:: ein Element der Werkzeugmaschine aus Fig. 1 in vergrößerter Darstellung;
- Fig. 4:: ein Detail aus Fig. 3 in vergrößerter Darstellung;
- Fig. 5:: ein Detail der Werkzeugmaschine aus Fig. 1 bei einer alternativen Ausführungsform der Erfindung;
- Fig. 6:: die Ansicht gemäß Fig. 5 bei einer alternativen Ausführungsform der Erfindung;
- Fig. 7:: eine alternative Ausführungsform eines erfindungsgemäßen Schweißwerkzeugs.

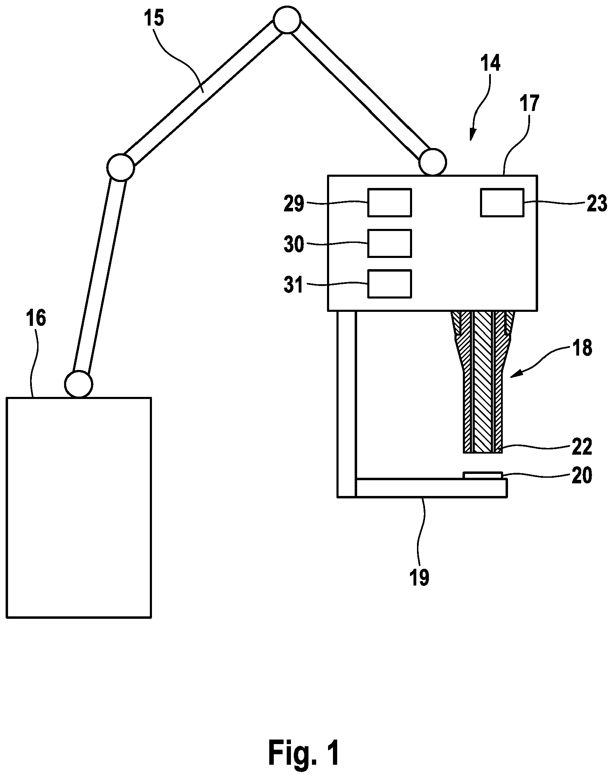

Die Fig. 1 zeigt eine Werkzeugmaschine, bei der eine Schweißvorrichtung 14 über einen Roboterarm 15 an einer Tragestruktur 16 aufgehängt ist. Mit dem Roboterarm 15 kann die Schweißvorrichtung 14 relativ zu der Tragestruktur 16 bewegt werden.

Die Schweißvorrichtung 14 umfasst einen Rahmen 17, an dem ein Schweißwerkzeug 18 und ein Gegenhalter 19 befestigt sind. Eine Auflagefläche 20 des Gegenhalters liegt einem distalen Ende 22 des Schweißwerkzeugs 18 gegenüber. Um zwei Aluminium-Bleche (nicht dargestellt) miteinander zu verbinden, wird die Schweißvorrichtung 14 über den Roboterarm 15 so bewegt, dass das Schweißwerkzeug 18 und der Gegenhalter 19 die beiden Aluminium-Bleche zwischen sich einschließen. Mit einem Antrieb 23 wird das Schweißwerkzeug 18 an den Gegenhalter 19 angenähert, so dass das distale Ende 22 des Schweißwerkzeugs und die Auflagefläche 20 des Gegenhalters von gegenüberliegenden Seiten Druck auf die Aluminium-Bleche ausüben und die Aluminium-Bleche zwischen dem Schweißwerkzeug 18 und dem Gegenhalter 19 eingeklemmt sind.

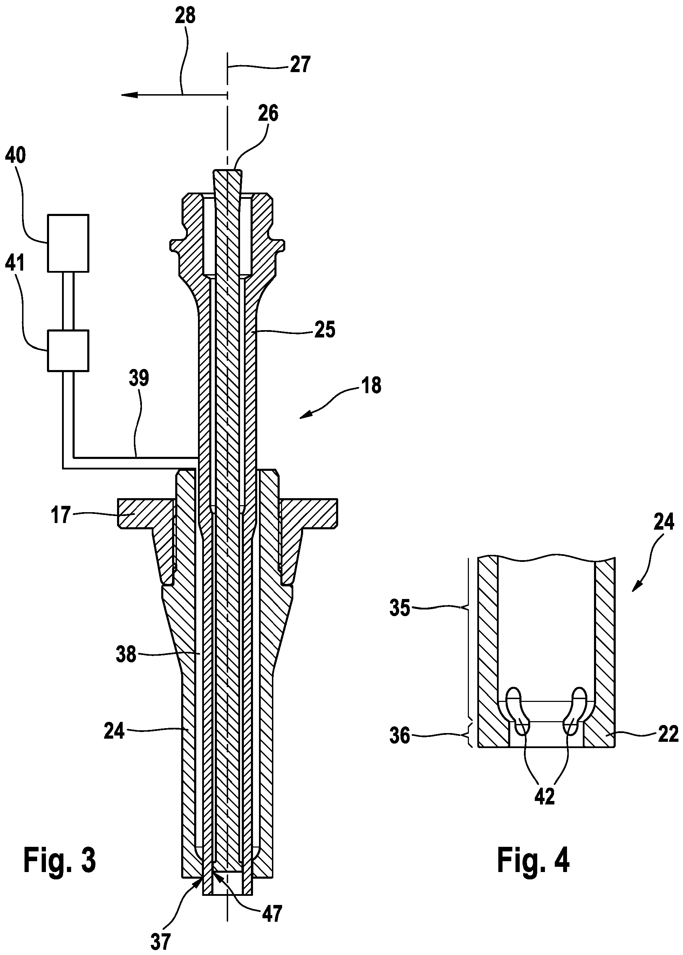

Gemäß der vergrößerten Darstellung in Fig. 3 umfasst das Schweißwerkzeug 18 einen Stempel 24, eine Hülse 25 und einen Stift 26, die koaxial zu einer Achse 27 angeordnet sind. Die Achse 27 definiert die Axialrichtung der Schweißvorrichtung 14. Die Radialrichtung 28 schließt mit der Axialrichtung 27 einen rechten Winkel ein.

Der Stempel 24 steht in einer starren Verbindung mit dem Rahmen 17 der Schweißvorrichtung 14. Die Hülse 25 ist in Axialrichtung verschiebbar und um die Achse 27 drehbar relativ zu dem Stempel 24 gelagert. Der Stift 26 ist in Axialrichtung 27 verschiebbar relativ zu der Hülse 25 gelagert. Die Schweißvorrichtung 14 umfasst einen Drehantrieb 29, mit dem die Hülse 25 und der Stift 26 in eine gemeinsame Drehbewegung relativ zu dem Stempel 24 versetzt werden können. Ein erster Linearantrieb 30 ist dazu ausgelegt, eine lineare Bewegung in Axialrichtung 27 zwischen der Hülse 25 und dem Stempel 24 anzutreiben. Ein zweiter Linearantrieb 31 ist dazu ausgelegt, eine Linearbewegung in Axialrichtung 27 zwischen dem Stift 26 und der Hülse 25 anzutreiben.

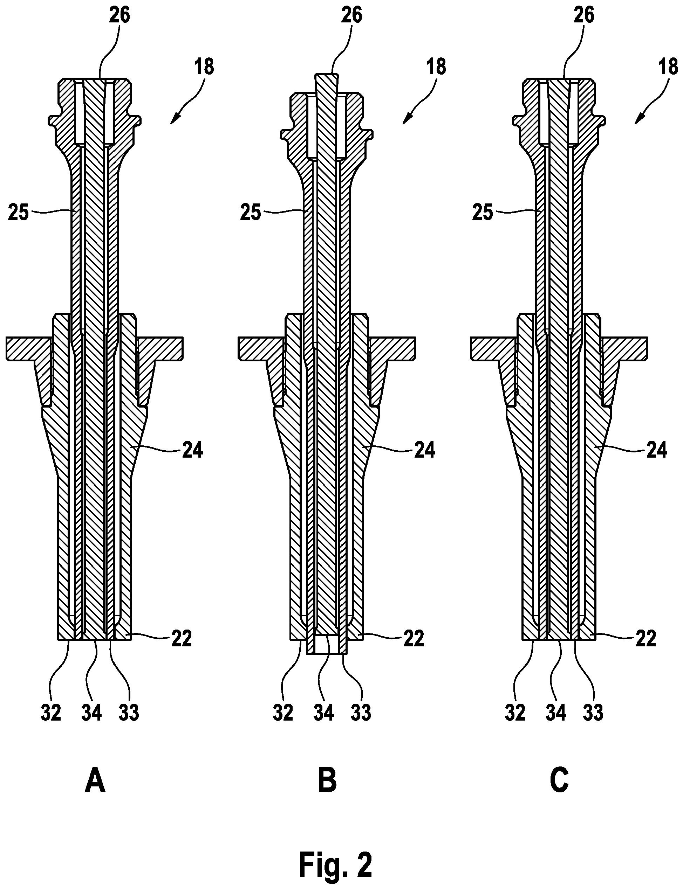

Der Ablauf eines Schweißvorgangs wird anhand von Fig. 2 erläutert. Zu Beginn des Schweißvorgangs, wenn das Schweißwerkzeug 18 und der Gegenhalter 19 an die Aluminium-Bleche herangeführt sind und auf den Aluminium-Blechen aufliegen (Fig. 2A), ist das Schweißwerkzeug 18 in einem Ausgangszustand, in dem eine Stirnfläche 32 des Stempels 24, eine Stirnfläche 33 der Hülse 25 sowie eine Stirnfläche 34 des Stifts 26 am distalen Ende 22 des Schweißwerkzeugs 18 bündig miteinander abschließen und in einer gemeinsamen Ebene liegen. Die Stirnflächen 32, 33, 34 liegen auf der Oberfläche eines der zu verbindenden Aluminium-Bleche auf.

Die Hülse 25 und der Stift 26 werden mit dem Drehantrieb 29 in Drehung versetzt, so dass das Aluminium-Material unter der Reibung der Stirnflächen 33, 34 in einen teigigen Zustand übergeht. Parallel zu der Drehbewegung wird die Hülse 25 mit dem ersten Linearantrieb 30 nach vorne gefahren, so dass das distale Ende der Hülse 25 in das Blech eindringt und dabei Aluminium-Material verdrängt. Ein Raum zur Aufnahme des verdrängten Aluminium-Materials wird geschaffen, indem gleichzeitig der Stift 26 mit dem zweiten Linearantrieb 31 zurückgezogen wird.

Die Hülse 25 dringt so weit in das Material der Bleche ein, bis sie zu dem untersten der zu verbindenden Bleche vordringt. Unter Beibehaltung der Drehbewegung wird die Linearbewegung dann umgekehrt, so dass die Hülse 25 zurückgezogen wird und der Stift 26 nach vorne bewegt wird. Der Zustand des Schweißwerkzeugs 18, in dem die Hülse 25 am weitesten ausgefahren ist und der Stift 26 am weitesten zurückgezogen ist, ist in Fig. 2B dargestellt. Nachdem die Hülse 25 und der Stift 46 bis in die Ausgangsposition zurückgefahren sind (Fig. 2C), wird die Drehbewegung zu einem Halt gebracht, und das Schweißwerkzeug 18 sowie der Gegenhalter 19 werden von der Oberfläche der Bleche entfernt. Das während des Schweißvorgangs in den teigigen Zustand versetzte Aluminium-Material der Bleche bildet eine punktförmige Schweißverbindung zwischen den beteiligten Blechen.

Der Stempel 24 umfasst gemäß der vergrößerten Darstellung in Fig. 4 einen Aufnahmeabschnitt 35 und einen Dichtabschnitt 36. In dem Aufnahmeabschnitt 35 hat der Stempel 24 einen größeren Innendurchmesser als in dem Dichtabschnitt 36. Der Innendurchmesser des Dichtabschnitts 36 ist so bemessen, dass er zum Au-ßenumfang der Hülse 25 passt. Der Stempel 24 liegt in dem Dichtabschnitt also mit einem minimalen Abstand an dem Außenumfang der Hülse 25 an. Mit anderen Worten ist zwischen der Hülse 25 und dem Dichtabschnitt 36 des Stempels 24 ein Dichtspalt 37 eingeschlossen, der so bemessen ist, dass möglichst wenig des teigigen Aluminium-Materials eindringen kann. Ein vergleichbarer Dichtspalt 47 ist zwischen der Außenwand des Stifts 26 und der Innenwand der Hülse 25 eingeschlossen.

In dem Aufnahmeabschnitt 35 ist zwischen der Innenwand des Stempels 24 und der Außenwand der Hülse 25 ein ringförmiger Aufnahmeraum 38 eingeschlossen. Der Aufnahmeraum 38 bildet einen Abschnitt eines Luftkanals 39, der sich von einem Gebläse 40 über eine Kühleinrichtung 41 zu dem Aufnahmeraum 38 erstreckt.

Nahe seinem distalen Ende 22 ist der Stempel 24 mit Durchgangsöffnungen 42 versehen, die sich in Radialrichtung 28 durch die Wand des Stempels 24 hindurch erstreckt. Die Durchgangsöffnungen 42 bilden einen Auslass des Luftkanals 39. Über den Umfang des Stempels 24 sind insgesamt vier Durchgangsöffnungen 42 gleichmäßig verteilt, von denen zwei Durchgangsöffnungen 42 in Fig. 4 zu sehen sind.

Bezogen auf die Axialrichtung 27 überlappen die Durchgangsöffnungen 42 sowohl mit dem Dichtabschnitt 36 als auch mit dem Aufnahmeabschnitt 35 des Stempels 24. Insbesondere erstrecken die Durchgangsöffnungen 42 sich über die abgerundete Kontur hinweg, durch die der Aufnahmeabschnitt 35 und der Dichtabschnitt 36 miteinander verbunden sind.

Der Dichtspalt 37 zwischen dem Stempel 24 und der Hülse 24 kann nicht so gestaltet werden, dass ein Eindringen des teigigen Aluminium-Materials vollständig vermieden wird. Der Luftstrom in dem Kühlkanal 39 trägt dazu bei, durch den Dichtspalt 37 eindringende Teile des Aluminium-Materials zu einem schnellen Abkühlen zu bringen. Durch die Überlappung zwischen den Durchgangsöffnungen 42 und dem Dichtabschnitt 36 des Stempels 24 kann der Luftstrom unmittelbar im Bereich des Dichtspalts 37 auf das Aluminium-Material wirken. Durch die gleichzeitige Scherbewegung, die sich aus der Drehung der Hülse 25 relativ zu dem Stempel 24 ergibt, wird das Aluminium-Material beim Abkühlen in kleine Partikel zerteilt. Die Partikel treten zusammen mit dem Luftstrom durch die Durchgangsöffnungen 42 aus dem Schweißwerkzeug 18 aus. Indem der Luftstrom das Schweißwerkzeug 18 bis zum distalen Ende 22 kühlen kann und zugleich das in kleine Partikel unterteilte Aluminium-Material aus dem Schweißwerkzeug 18 abgeführt wird, wird die Standzeit des Schweißwerkzeugs 18 erhöht.

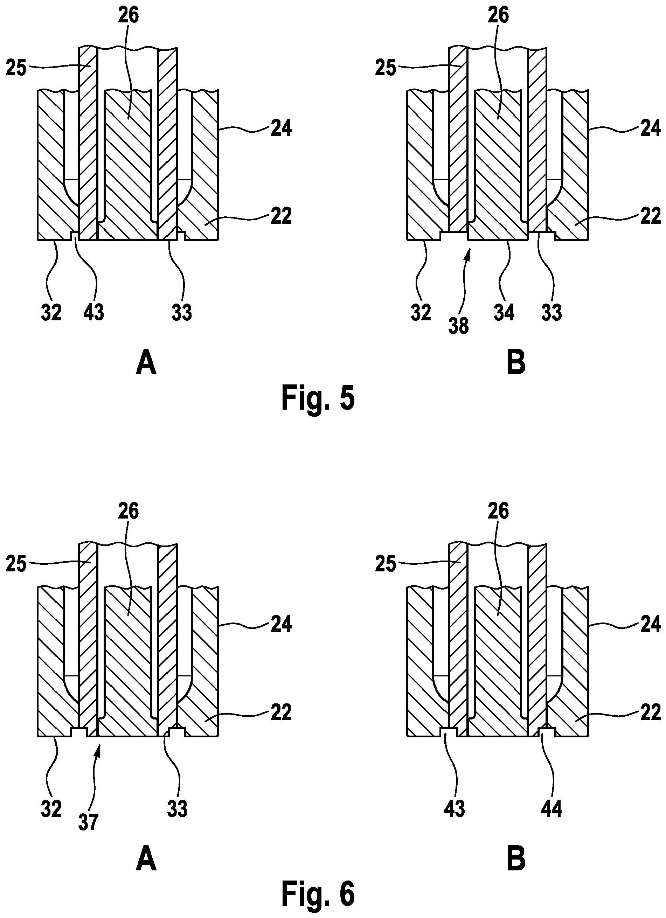

In Fig. 5 ist das distale Ende 22 des Schweißwerkzeugs 18 bei einer alternativen Ausführungsform der Erfindung gezeigt. Die Stirnfläche 32 des Stempels 24 ist mit einer Ausnehmung 43 versehen, die an den Dichtspalt 37 angrenzt und die sich über den Umfang des Schweißwerkzeugs 18 erstreckt. Zu Beginn des Schweißvorgangs liegen die Stirnflächen 32, 33, 34 des Stempels 24, der Hülse 25 und des Stifts 26 wie in Fig. 5A gezeigt auf dem Aluminium-Blech auf. Am Ende des Schweißvorgangs (Fig. 5B) wird die Hülse 25 etwas weiter zurückgezogen, so dass die Stirnfläche 33 der Hülse 25 zusammen mit der Ausnehmung 43 des Stempels 24 einen ringförmigen Raum zur Aufnahme des Aluminium-Materials bildet. Das Aluminium-Blech wird über den Umfang des Schweißpunkts leicht aufgedickt, wodurch die Stabilität der Schweißverbindung erhöht wird.

Eine alternative Möglichkeit, die Stabilität der Schweißverbindung durch einer Aufdickung zu erhöhen, ist in Fig. 6 gezeigt. Die Hülse 25 ist mit einer zu der Ausnehmung 43 des Stempels 24 benachbarten ringförmigen Ausnehmung 44 versehen. Die Ausnehmungen 43, 44 bilden gemeinsam einen ringförmigen Raum zur Aufnahme des Aluminium-Materials. Die Hülse 25 wird am Ende des Schweißvorgangs nur soweit zurückgezogen, bis die Stirnflächen 32, 33, 34 des Stempels 24, der Hülse 25 und des Stifts 26 in einer Ebene liegen.

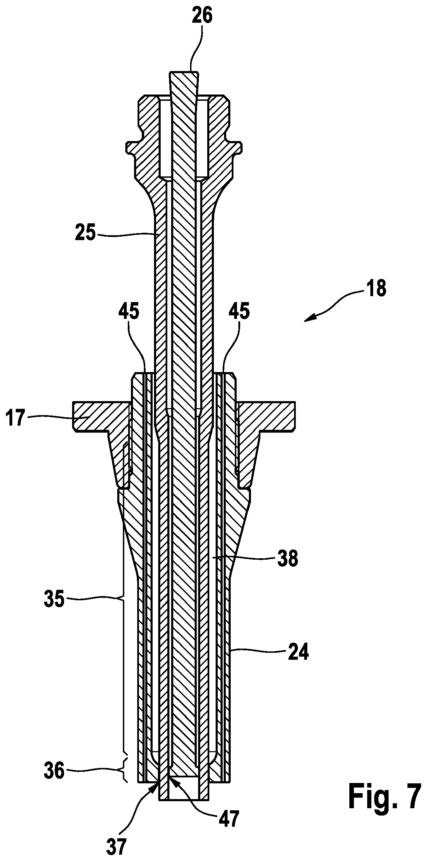

Bei der alternativen Ausführungsform gemäß Fig. 7 ist der Stempel 24 des Schweißwerkzeugs 18 mit einer Mehrzahl von Kühlbohrungen 45 versehen, die sich in Axialrichtung 27 innerhalb der Wand des Stempels 24 erstrecken. Zur Kühlung des Schweißwerkzeugs 18 kann eine Kühlflüssigkeit durch die Kühlbohrungen 45 geleitet werden.

## Patentansprüche

1. Vorrichtung zum Reibpunktschweißen, mit einem Stempel (24), einer koaxial innerhalb des Stempels (24) angeordneten Hülse (25) und einem koaxial innerhalb der Hülse (25) angeordneten Stift (26), mit einem Drehantrieb (29), um eine Drehbewegung der Hülse (25) und/oder des Stifts (26) relativ zu dem Stempel (24) anzutreiben, und mit einem Linearantrieb (30, 31), um eine Linearbewegung der Hülse (25) und/oder des Stifts (26) relativ zu dem Stempel (24) anzutreiben, wobei in einem distal angeordneten Dichtabschnitt (36) der Stempel (24) mit der Hülse (25) einen Dichtspalt (37) einschließt, wobei in einem zu dem Dichtabschnitt (36) benachbarten Aufnahmeabschnitt (35) der Stempel (24) mit der Hülse (25) einen Aufnahmeraum (38) einschließt und wobei der Stempel (24) eine radiale Durchgangsöffnung (42) umfasst, die in Axialrichtung (27) mit dem Dichtabschnitt (36) und mit dem Aufnahmeabschnitt (35) überlappt.

2. Vorrichtung nach Anspruch 1, **dadurch gekennzeichnet, dass** die Durchgangsöffnung (42) einen Abschnitt eines Luftkanals (39) bildet.

3. Vorrichtung nach Anspruch 2, **dadurch gekennzeichnet, dass** der Aufnahmeraum (38) einen Abschnitt des Luftkanals (39) bildet.

4. Vorrichtung nach einem der Ansprüche 1 bis 3, **gekennzeichnet durch** eine Kühlbohrung (45), die sich in Axialrichtung (27) innerhalb der Wand des Stempels (24) erstreckt.

5. Vorrichtung nach einem der Ansprüche 1 bis 4, **dadurch gekennzeichnet, dass** die Relativbewegung zwischen dem Stempel (24), der Hülse (25) und/oder dem Stift (26) mit einem Schmierstoff geschmiert ist.

6. Vorrichtung nach einem der Ansprüche 1 bis 5, **dadurch gekennzeichnet, dass** die Länge des Dichtabschnitts (36) in Axialrichtung (27) kleiner ist als der Außendurchmesser der Hülse (25), insbesondere kleiner ist als der Außendurchmesser des Stifts (26).

7. Vorrichtung nach einem der Ansprüche 1 bis 6, **dadurch gekennzeichnet, dass** eine Mehrzahl von Durchgangsöffnungen (42) über den Umfang des Stempels (24) verteilt ist.

8. Vorrichtung nach einem der Ansprüche 1 bis 7, **dadurch gekennzeichnet, dass** in einer Stirnfläche (32) des Stempels (24) eine zu der Hülse (25) benachbarte Ausnehmung (43) ausgebildet ist.

9. Vorrichtung nach einem der Ansprüche 1 bis 8, **dadurch gekennzeichnet, dass** in einer Stirnfläche (32) der Hülse (25) eine zu dem Stempel (25) benachbarte Ausnehmung (44) ausgebildet ist.

10. Vorrichtung nach einem der Ansprüche 1 bis 9, **gekennzeichnet durch** einen Gegenhalter (19), wobei eine Auflagefläche (20) des Gegenhalters (19) gegenüber einer Stirnfläche (32) des Stempels (24) angeordnet ist.
